# EUROPÄISCHE PATENTSCHRIFT

(11) **EP 2 209 605 B1**
(45) Veröffentlichungstag und Bekanntmachung des Hinweises auf die Patenterteilung: **17.09.2014**
(21) Anmeldenummer: 08852582.9
(22) Anmeldetag: 19.11.2008
(51) Int. Cl.: B29B 11/14, B29C 49/06, A61J 1/00

(54) **VORFORMLING UND VERFAHREN ZUR HERSTELLUNG EINES BEHÄLTNISSES ZUR AUFNAHME VON FLÜSSIGKEITEN FÜR MEDIZINISCHE ANWENDUNGEN**
PARISON AND METHOD FOR THE PRODUCTION OF A RECEPTACLE USED FOR HOLDING LIQUIDS FOR MEDICAL APPLICATIONS
PARAISON ET PROCÉDÉ DE FABRICATION D'UN RÉCIPIENT DESTINÉ À CONTENIR DES LIQUIDES POUR APPLICATIONS MÉDICALES

(30) Priorität: 22.11.2007 DE 102007056486
(43) Veröffentlichungstag der Anmeldung: 28.07.2010
(73) Patentinhaber: Fresenius Kabi Deutschland GmbH, 61352 Bad Homburg v.d.H. (DE)
(72) Erfinder: BRANDENBURGER, Torsten, 61203 Reichelsheim (DE); GREIER, Gerhard, 61381 Friedrichsdorf (DE); RAHIMY, Ismael, 61169 Friedberg (DE)
(86) Internationale Anmeldenummer: PCT/EP2008/009753
(87) Internationale Veröffentlichungsnummer: WO 2009/065560

(56) Entgegenhaltungen:
- EP-A- 0 483 671
- JP-A- 2003 080 588

## Beschreibung

Die Erfindung bezieht sich auf einen Vorformling zur Herstellung eines Behältnisses zur Aufnahme von Flüssigkeiten für medizinische Anwendungen, insbesondere zur Aufnahme von Infusions-, Transfusionslösungen oder enteralen Nährlösungen. Darüber hinaus betrifft die Erfindung ein Verfahren zur Herstellung eines Behältnisses zur Aufnahme von Flüssigkeiten für medizinische Anwendungen, insbesondere von Infusions-, Transfusionslösungen oder enteralen Nährlösungen. Des Weiteren betrifft die Erfindung ein Behältnis zur Aufnahme von Flüssigkeiten für medizinische Anwendungen.

Es ist eine Vielzahl von Behältnissen unterschiedlicher Ausbildung zur Aufnahme von Flüssigkeiten bekannt. Behältnisse zur Aufnahme von Flüssigkeiten für medizinische Behandlungen müssen besonderen Anforderungen, insbesondere an die Sterilität genügen.

Es sind Behältnisse für medizinische Flüssigkeiten, beispielsweise Flaschen aus extrudiertem PE oder PP bekannt, die in einem Arbeitsgang steril und pyrogenfrei durch biaxiales Strecken und Blasformen eines Vorformlings, der auch als Preform bezeichnet wird, in die gewünschte Form gebracht werden, nach der Abkühlung mit einem sterilen Füllgut aseptisch befüllt und anschließend hermetisch verschlossen werden. Diese nach dem Blasen-Füllen-Verschließen-Verfahren (Blow-Fill-Seal-Verfahren) hergestellten Behältnisse, insbesondere Flaschen, werden auch als PFS-Behälter bezeichnet.

Die bekannten Behältnisse für Infusionslösungen oder enterale Nährlösungen werden im Allgemeinen an einem Ständer aufgehängt. Dafür verfügen die Behältnisse über einen Aufhänger. Es sind zahlreiche Behälter bekannt, die über einen Aufhänger verfügen, der einstückiger Bestandteil des Behälters ist. Die EP 070 641 A1 und die US 3 901 399 beispielsweise beschreiben Flaschen, an deren Bodenteil Aufhänger angeformt sind. Die Aufhänger sind als Ösen ausgebildet, um die Flasche an einem Haken aufhängen zu können.

Die EP 0 483 671 B1 beschreibt ein Verfahren zur Herstellung eines Infusionsbehältnisses, das über einen ringförmigen Aufhänger am Boden der Flasche verfügt. Die Flasche wird durch biaxiales Strecken und Aufblasen aus einem Vorformling (Preform) hergestellt. Der Vorformling selbst wird zusammen mit dem ringförmigen Aufhänger im Spritzgießverfahren gefertigt. Das bekannte Herstellungsverfahren zeichnet sich dadurch aus, dass ein weiterer Arbeitsschritt zur Befestigung eines Aufhängers nach dem Blasformen nicht erforderlich ist.

Der Erfindung liegt die Aufgabe zu Grunde, einen Vorformling bereitzustellen, mit dem ein Behältnis zur Aufnahme von Flüssigkeiten für medizinische Anwendungen, insbesondere zur Aufnahme von Infusionslösungen oder enteralen Nährlösungen auf einfache Weise mit einem Aufhänger hergestellt werden kann. Darüber hinaus ist eine Aufgabe der Erfindung, ein einfach durchzuführendes Verfahren zur Herstellung eines Behältnisses zur Aufnahme von medizinischen Flüssigkeiten anzugeben, dass über einen Aufhänger verfügt. Eine weitere Aufgabe der Erfindung ist, ein einfach herzustellendes Behältnis zur Aufnahme von medizinischen Flüssigkeiten bereitzustellen.

Die Lösung dieser Aufgaben erfolgt erfindungsgemäß mit den Merkmalen der Patentansprüche 1 und 11. Vorteilhafte Ausführungsformen der Erfindung sind Gegenstand der Unteransprüche.

Der erfindungsgemäße Vorformling zur Herstellung eines Behältnisses für medizinische Flüssigkeiten, der einen Halsteil mit einer Öffnung, einen Wandteil und einen Bodenteil aufweist, zeichnet sich dadurch aus, dass an die Unterseite des Bodenteils das eine Ende eines Teilstücks eines ringförmigen Aufhängers zum Aufhängen des Behältnisses angeformt ist, wobei das freie Ende des Teilstücks vorzugsweise unter Verformung desselben mit der Unterseite des Bodenteils zu dem ringförmigen Aufhänger verbunden werden kann.

Der ringförmigen Aufhänger kann kreisringförmig oder auch oval ausgebildet sein. Grundsätzlich sind aber auch eckige Formen möglich, solange derAufhänger jedoch eine geschlossene Ringform bildet.

Zunächst wird der Vorformling hergestellt, wobei das freie Ende des Teilstücks des Aufhängers noch nicht mit der Unterseite des Bodenteils verbunden ist. Anschließend wird das Behältnis durch Strecken und Blasformen aus dem Vorformling geformt. Die hierzu erforderlichen Verfahrensschritte sind dem Fachmann bekannt.

Der Vorformling selbst wird vorzugsweise im Spritzgießverfahren hergestellt. Die hierzu erforderlichen Verfahrensschritte sind dem Fachmann ebenfalls bekannt. Entscheidend ist, dass beim Spritzgießen des Vorformlings das Teilstück des Aufhängers noch nicht mit dem Bodenteil verbunden ist. Dadurch wird das Spritzgießverfahren zur Herstellung des Vorformling vereinfacht. Es ergibt sich eine relativ hohe Füllgeschwindigkeit des Formwerkzeugs im Bereich des Aufhängers aufgrund eines geringeren Anspritzdurchmessers durch zwei Anspritzpunkte, so dass sich die Zykluszeiten verkürzen. Weiterhin ergibt sich eine genaue Wandstärkenverteilung und schnelle Kühlung und damit ein besseres Lösen vom Formwerkzeug. Ferner wird das gesamte Volumen der Flasche ausgenutzt.

Die Verbindung des Teilstücks des Aufhängers mit dem Bodenteil kann nach dem Spritzgussprozess, während des Streckblasens oder auch erst später beim Kunden erfolgen.

Bei einer bevorzugten Ausführungsform des Vorformling ist das Teilstück des Aufhängers als flexibler Streifen ausgebildet. Die zur Verformung des Teilstücks zu dem ringförmigen Aufhänger erforderliche Beweglichkeit kann durch die Auswahl eines Materials mit ausreichender Flexibilität und/oder durch eine geeignete Dimensionierung des Querschnitts des Teilstücks erreicht werden.

Das Teilstück des Aufhängers ist vorzugsweise als flacher Streifen mit einem rechteckförmigen Querschnitt ausgebildet. Dadurch ist auch bei einem weniger flexiblen Material eine ausreichende Flexibilität gegeben. Auf jeden Fall sollte das Material so flexibel sein, dass es beim Biegen nicht bricht. Anstelle eines rechteckförmigen Querschnitts ist aber auch ein kreisförmiger Querschnitt möglich.

Bei einer weiteren bevorzugten Ausführungsform sind das freie Ende des Teilstücks und der Bodenteil mit einer formschlüssigen Verbindung, vorzugsweise mit einer Schnappoder Rastverbindung miteinander verbindbar, so dass die Verbindung auch erst beim Kunden erfolgen kann. Das freie Ende des Teilstücks weist vorzugsweise einen Ansatz auf, der in eine hinterschnittene Ausnehmung des Bodenteils einsetzbar ist.

Es sind grundsätzlich aber auch andere Verbindungstechniken möglich. So kann das freie Ende des Teilstücks des Aufhängers beispielsweise mit dem Bodenteil auch verschweißt oder vernietet werden.

Das Teilstück des Aufhängers ist vorzugsweise zu einer Öse vorgeformt, so dass es sich leicht zu dem ringförmigen Anhänger verformen lässt. Grundsätzlich ist es aber auch möglich, das Teilstück im Wesentlichen gerade oder nur leicht gebogen auszubilden. Dann ist aber eine größere Flexibilität erforderlich, um das Teilstück zu dem ringförmigen Aufhänger biegen zu können.

Eine weitere besonders bevorzugte Ausführungsform sieht vor, dass das an die Unterseite des Bodenteils angeformte Ende des Teilstück als ein an die Unterseite des Bodenteils angeformtes Basisstück ausgebildet ist, mit dem das freie Ende des Teilstücks unter Verformung desselben zu dem ringförmigen Aufhänger verbindbar ist. Vorzugsweise ist das Basisstück als ein flacher Körper ausgebildet.

Im Folgenden werden verschiedene Ausführungsbeispiele der Erfindung unter Bezugnahme auf die Zeichnungen näher erläutert.

Es zeigen:
- Fig. 1: ein Ausführungsbeispiel des erfindungsgemäßen Vorformlings in geschnittener Darstellung,
- Fig. 2: einen Schnitt durch den Vorformling von Fig. 1,
- Fig. 3: den Ausschnitt A von Fig. 1 in vergrößerter Darstellung und
- Fig. 4: eine perspektivische Darstellung des Ausschnitts A von Fig. 1.

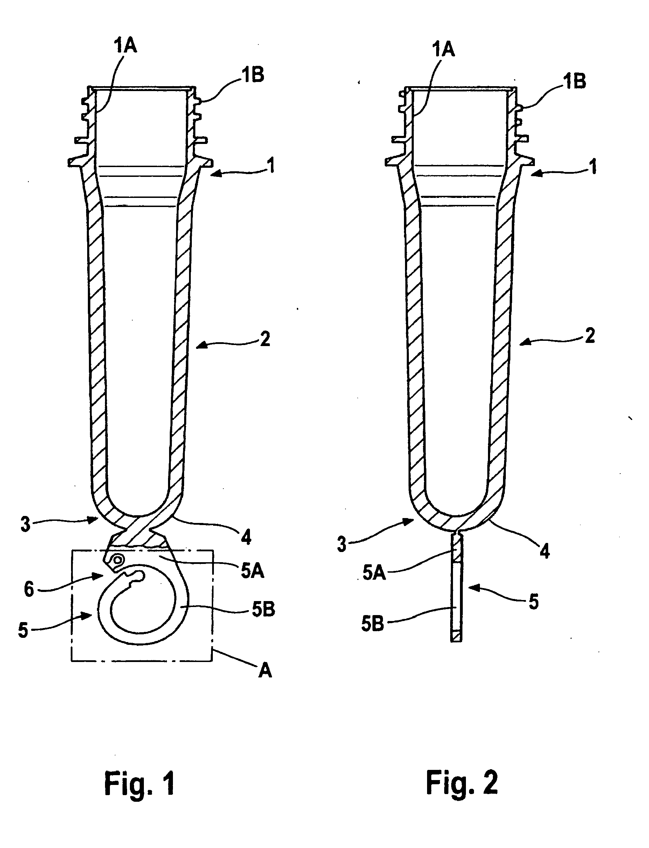

Die Figuren 1 und 2 zeigen in geschnittener Darstellung ein Ausführungsbeispiel des erfindungsgemäßen Vorformling zur Herstellung eines Behältnisses zur Aufnahme einer medizinischen Flüssigkeit, insbesondere einer Infusionslösung oder enteralen Nährlösung. Der Vorformling wird im Spritzgießverfahren, insbesondere im Spritzgießverfahren mit zwei bzw. drei Komponenten aus Kunststoff, insbesondere Polypropylen PP, Polyethylen PE, PET oder einer Kombination aus PP, PE, PET hergestellt, das eine ausreichende Stabilität hat. Der Vorformling weist einen Halsteil 1 mit einer Öffnung 1A auf, der mit einem Außengewinde 1B versehen ist. An den Halsteil 1 schließt sich ein Wandteil 2 an, das in einen Bodenteil 3 übergeht.

Der Bodenteil 3 des Vorformling weist einen Abschnitt 4 mit einem halbkugelförmigen Querschnitt auf, an dessen Unterseite ein Kunststoffteil 5 angeformt ist, der später den Aufhänger bildet.

Das den Aufhänger bildende Kunststoffteil 5 weist einen flachen Basiskörper 5A auf, der an die Unterseite des halbkugelförmigen Abschnitts 4 des Bodenteils 3 angeformt und somit einstückiger Bestandteil des Bodenteils ist. An eine Seite des Basiskörpers 5A schließt sich ein flaches Teilstück 5B an, das nach innen zu einer Öse derart gebogen ist, dass das freie Ende des Teilstücks bis nahe an die andere Seite des Basiskörpers 5A reicht. Das flache Teilstück 5B weist einen rechteckförmigen Querschnitt auf.

Mit einer Rast- oder Schnappverbindung 6 kann das freie Ende des Teilstücks 5B mit dem Basiskörper 5A unter Ausbildung eines Aufhängers mit einem im Wesentlichen kreisringförmigen Querschnitt verbunden werden. Die Rast- oder Schnappverbindung umfasst einen vorspringenden Ansatz 7 an dem freien Ende des Teilstücks 5B, der passend in eine hinterschnittene Ausnehmung 8 in dem Basiskörper 5A eingesetzt werden kann. Dadurch wird eine formschlüssige Nut- und Federverbindung geschaffen.

Zur Sicherung der Feder in der Nut weist der vorspringende Ansatz 7 an dem freien Ende des Teilstücks 5B einen Kopf 9 mit einem kreisförmigen Querschnitt auf, der einschnappend in ein Loch 10 am Boden der Ausnehmung 8 des Basiskörpers 5A gedrückt werden kann. Dadurch wird eine Verbindung in der Art eines Druckknopfs geschaffen.

Anstelle einer Verbindung in der Art eines Druckknopfs kann auch eine Nietverbindung vorgesehen sein. Bei der Nietverbindung dient das Loch 10 am Boden der Ausnehmung 8 als Bohrung zur Aufnahme eines Niets, der anstelle des Druckknopfs an den vorspringenden Ansatz 7 angeformt ist. Der Niet, der einen etwas kleineren Durchmesser als die Bohrung hat, wird durch die Bohrung geschoben, so dass der Nietschaft aus der Bohrung heraus vorsteht. Zum Verbinden der beiden Bauteile wird das überstehende Ende der Niet durch Bearbeiten in der Breite zu dem so genannten Schließkopf verformt, der die Bauteile sicher verbindet. Das Bearbeiten kann entweder durch Aufwenden von plötzlichem Druck (Schlag) bzw. kontinuierlichem Druck (Kaltpressen) oder durch Hitzeeinwirkung erfolgen, so dass die Materialien verschweißt werden. Die Nietverbindung hat den Vorteil, dass in keines der Bauteile ein Gewinde eingebracht oder ähnliche Verbindungstechniken vorgesehen werden müssen, obwohl die Verbindung derart kraftschlüssig ist, dass sie nicht zerstörungsfrei gelöst werden kann.

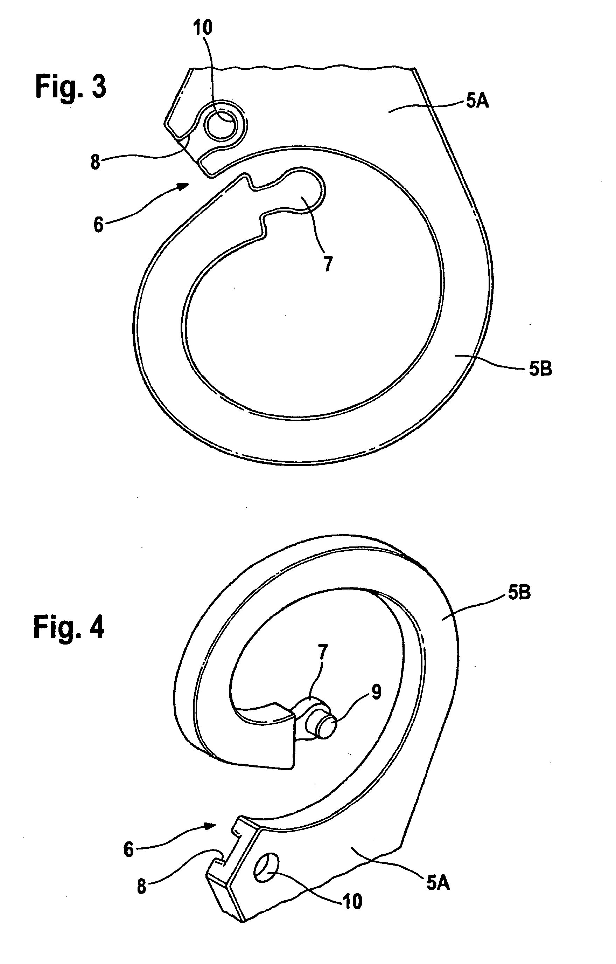

Die Figuren 3 und 4 zeigen den Aufhänger in vergrößerter Darstellung vor dem Verbinden des Teilstücks 5B des Aufhängers mit dem Basiskörper 5A. Die miteinander zu verbindenden Stücke liegen dicht nebeneinander. Nach dem Verbinden des Teilstücks mit dem Basiskörper bildet der Aufhänger eine kreisringförmige Öse.

Das Behältnis wird aus dem Vorformling durch biaxiales Strecken und Aufblasen nach den bekannten Verfahren geformt. Dabei bleibt die Form des Aufhängers unverändert. Erst nach dem Spritzgießen wird das Teilstück mit dem Basiskörper unter Ausbildung des Aufhängers verbunden. Dadurch wird das Spritzgießen vereinfacht. Der Schweißvorgang wird vorzugsweise während des Streckens und Aufblasens durchgeführt. Grundsätzlich ist es aber auch möglich, das Teilstück und den Basiskörper vor dem Strecken und Aufblasen, aber nach dem Spritzgießen miteinander zu verbinden.

## Patentansprüche

1. Vorformling zur Herstellung eines Behältnisses zur Aufnahme von Flüssigkeiten für medizinische Anwendungen, insbesondere zur Aufnahme von Infusionslösungen oder enteralen Nährlösungen, wobei der Vorformling einen Halsteil (1) mit einer Öffnung (1A), einen Wandteil (2) und einen Bodenteil (3) aufweist,
**dadurch gekennzeichnet, dass** an die Unterseite des Bodenteils (3) das eine Ende eines Teilstücks (5B) eines ringförmigen Aufhängers zum Aufhängen des Behältnisses angeformt ist, wobei das freie Ende des Teilstücks (5B) mit der Unterseite des Bodenteils (3) zu dem ringförmigen Aufhänger verbindbar ist.

2. Vorformling nach Anspruch 1, **dadurch gekennzeichnet, dass** das Teilstück (5B) des Aufhängers als flexibler Streifen ausgebildet ist.

3. Vorformling nach Anspruch 2, **dadurch gekennzeichnet, dass** der flexible Streifen (5B) als flacher Streifen mit einem rechteckfömigen Querschnitt ausgebildet ist.

4. Vorformling nach einem der Ansprüche 1 bis 3, **dadurch gekennzeichnet, dass** das freie Ende des Teilstücks (5B) des Aufhängers und der Bodenteil (3) mit einer formschlüssigen Verbindung miteinander verbindbar sind.

5. Vorformling nach Anspruch 4, **dadurch gekennzeichnet, dass** die formschlüssige Verbindung eine Schnapp- oder Rastverbindung (6) ist.

6. Vorformling nach Anspruch 4 oder 5, **dadurch gekennzeichnet, dass** das freie Ende des Teilstücks (5B) des Aufhängers einen Ansatz (7) und der Bodenteil (3) eine hinterschnittene Ausnehmung (8) aufweisen, wobei der Ansatz des Teilstücks in die hinterschnittene Ausnehmung des Bodenteils einsetzbar ist.

7. Vorformling nach Anspruch 4, **dadurch gekennzeichnet, dass** die formschlüssige Verbindung eine Nietverbindung ist.

8. Vorformling nach einem der Ansprüche 1 bis 7, **dadurch gekennzeichnet, dass** das Teilstück (5B) des Aufhängers zu einer Öse vorgeformt ist.

9. Vorformling nach einem der Ansprüche 1 bis 8, **dadurch gekennzeichnet, dass** das an die Unterseite des Bodenteils (3) angeformte Ende des Teilstück (5B) des Aufhängers als ein an die Unterseite des Bodenteils angeformtes Basisstück (5A) ausgebildet ist, mit dem das freie Ende des Teilstücks (5B) unter Verformung desselben zu dem ringförmigen Aufhänger verbindbar ist.

10. Vorformling nach Anspruch 9, **dadurch gekennzeichnet, dass** das Basisstück (5A) als ein flacher Körper ausgebildet ist.

11. Herstellung eines Behältnisses zur Aufnahme von medizinischen Flüssigkeiten, insbesondere zur Aufnahme von Infusionslösungen oder Lösungen für die enterale Ernährung, mit folgenden Verfahrensschritten:
Bereitstellen eines Vorformlings nach einem der Ansprüche 1 bis 10,
Strecken und Blasformen des Vorformlings zu einem Behältnis,
Verbinden des freien Endes des Teilstücks des Aufhängers mit der Unterseite des Bodenteils zu dem ringförmigen Aufhänger.

12. Verfahren nach Anspruch 11, **dadurch gekennzeichnet, dass** das freie Ende des Teilstücks des Aufhängers formschlüssig mit der Unterseite des Bodenteils verbunden wird.

13. Verfahren nach Anspruch 11 oder 12, **dadurch gekennzeichnet, dass** der Vorformling im Spritzgießverfahren hergestellt wird.

## Claims

1. A parison for the production of a receptacle used to hold liquids for medical applications, in particular to hold infusion solutions or enteral nutrient solutions, wherein the parison includes a neck part with an opening, a wall part and a bottom part,
**characterised in that** one end of a section of an annular suspension device for suspending the receptacle is moulded onto the underside of the bottom part, the free end of the section being able to be connected to the underside of the bottom part to form the annular suspension device.

2. The parison according to claim 1, **characterised in that** the section of the suspension device is constituted as a flexible strip.

3. The parison according to claim 2, **characterised in that** the flexible strip is constituted as a flat strip with a rectangular cross-section.

4. The parison according to any one of claims 1 to 3, **characterised in that** the free end of the section of the suspension device and the bottom part can be connected to one another with a keyed connection.

5. The parison according to claim 4, **characterised in that** the keyed connection is a snap- in or catch connection.

6. The parison according to claim 4 or 5, **characterised in that** the free end of the section of the suspension device includes a shoulder and the bottom part includes an undercut recess, the shoulder of the section being able to be inserted into the undercut recess of the bottom part.

7. The parison according to claim 4, **characterised in that** the keyed connection is a riveted joint.

8. The parison according to any one of claims 1 to 7, **characterised in that** the section of the suspension device is preformed into an eyelet.

9. The parison according to any one of claims 1 to 8, **characterised in that** the end of the section of the suspension device moulded onto the underside of the bottom part is constituted as a base piece moulded onto the underside of the bottom part, with which the free end of the section can be connected such that said section is deformed and the annular suspension device is formed.

10. The parison according to claim 9, **characterised in that** the base piece is constituted as a flat body.

11. Production of a receptacle used to hold medical liquids, in particular to hold infusion solutions or solutions for enteral nutrition, with the following process steps:
preparation of a parison in accordance with anyone of claims 1 to 10,
stretching and blow-moulding of the parison to form a receptacle,
connecting the free end of the section of the suspension device to the underside of the bottom part to form the annular suspension device.

12. The method according to claim 11, **characterised in that** the free end of the section of the suspension device is connected in a keyed manner to the underside of the bottom part.

13. The method according to claim 11 or 12, **characterised in that** the parison is produced by the injection moulding process.

## Revendications

1. Paraison pour la fabrication d'un récipient pour recevoir des liquides destinés à des applications médicales, en particulier pour recevoir des solutions de perfusion ou des solutions nutritives entérales, la paraison présentant une partie de col (1) avec une ouverture (1A), une partie de paroi (2) et une partie de fond (3),
**caractérisée en ce que** sur le côté inférieur de la partie de fond (3) est façonnée une extrémité d'une pièce partielle (5B) d'un élément d'accrochage de forme annulaire pour accrocher le récipient, l'extrémité libre de la pièce partielle (5B) pouvant être connectée au côté inférieur de la partie de fond (3) pour former l'élément d'accrochage de forme annulaire.

2. Paraison selon la revendication 1, **caractérisée en ce que** la pièce partielle (5B) de l'élément d'accrochage est réalisée sous forme de bande flexible.

3. Paraison selon la revendication 2, **caractérisée en ce que** la bande flexible (5B) est réalisée sous forme de bande plate de section transversale rectangulaire.

4. Paraison selon l'une quelconque des revendications 1 à 3, **caractérisée en ce que** l'extrémité libre de la pièce partielle (5B) de l'élément d'accrochage et la partie de fond (3) peuvent être connectées l'une à l'autre par une connexion par engagement par correspondance de forme.

5. Paraison selon la revendication 4, **caractérisée en ce que** la connexion par engagement par correspondance de forme est une connexion par encliquetage ou emboîtement (6).

6. Paraison selon la revendication 4 ou 5, **caractérisée en ce que** l'extrémité libre de la pièce partielle (5B) de l'élément d'accrochage présente une pièce saillante (7) et la partie de fond (3) présente un évidement en contre-dépouille (8), la pièce saillante de la pièce partielle pouvant être insérée dans l'évidement en contre-dépouille de la partie de fond.

7. Paraison selon la revendication 4, **caractérisée en ce que** la connexion par engagement par correspondance de forme est une connexion rivetée.

8. Paraison selon l'une quelconque des revendications 1 à 7, **caractérisée en ce que** la pièce partielle (5B) de l'élément d'accrochage est préformée en forme d'oeillet.

9. Paraison selon l'une quelconque des revendications 1 à 8, **caractérisée en ce que** l'extrémité de la pièce partielle (5B) de l'élément d'accrochage façonnée au niveau du côté inférieur de la partie de fond (3) est réalisée sous forme de pièce de base (5A) façonnée au niveau du côté inférieur de la partie de fond, avec laquelle l'extrémité libre de la pièce partielle (5B) peut être connectée en la déformant pour former l'élément d'accrochage de forme annulaire.

10. Paraison selon la revendication 9, **caractérisée en ce que** la pièce de base (5A) est réalisée sous forme de corps plat.

11. Fabrication d'un récipient pour recevoir des liquides médicaux, en particulier pour recevoir des solutions de perfusion ou des solutions pour alimentation entérale, comprenant les étapes de procédé suivantes :
fourniture d'une paraison selon l'une quelconque des revendications 1 à 10,
étirage et formage par soufflage de la paraison pour former un récipient,
connexion de l'extrémité libre de la pièce partielle de l'élément d'accrochage au côté inférieur de la partie de fond pour former l'élément d'accrochage de forme annulaire.

12. Procédé selon la revendication 11, **caractérisé en ce que** l'extrémité libre de la pièce partielle de l'élément d'accrochage est connectée par engagement par correspondance de forme au côté inférieur de la partie de fond.

13. Procédé selon la revendication 11 ou 12, **caractérisé en ce que** la paraison est fabriquée par un procédé de moulage par injection.
